Europäisches Patentamt

(19) European Patent Office

Office européen des brevets

(11) Publication number: **0 024 917**
**B1**

(12) # EUROPEAN PATENT SPECIFICATION

(45) Date of publication of patent specification: **21.09.83**

(51) Int. Cl.³: **H 02 G 15/04, H 02 G 3/06**

(21) Application number: **80302963.6**

(22) Date of filing: **27.08.80**

(54) Flameproof seals for the ends of electric cables and kits for and methods of making them.

(30) Priority: **29.08.79 GB 7929881**
**03.12.79 GB 7941631**

(43) Date of publication of application:
**11.03.81 Bulletin 81/10**

(45) Publication of the grant of the patent:
**21.09.83 Bulletin 83/38**

(84) Designated Contracting States:
**BE DE NL**

(56) References cited:
**EP - A - 0 013 148**
**GB - A - 1 524 684**
**GB - A - 1 528 348**
**US - A - 1 697 539**
**US - A - 2 542 583**

(73) Proprietor: **BICC Public Limited Company**
**21, Bloomsbury Street**
**London, WC1B 3QN (GB)**

(72) Inventor: **Hutchison, John Blundell**
**Hillside Cottage Town Well**
**Kingsley Cheshire (GB)**

(74) Representative: **Poole, Michael John et al,**
**BICC plc Patents Department 38 Wood Lane**
**London, W12 7DX (GB)**

Courier Press, Leamington Spa, England

Flameproof seals for the ends of electric cables and kits for and methods of making them.

This invention relates to sealing of the ends of electric cables and is particularly concerned with flameproof seals thereof.

According to the present invention, we provide a kit for effecting a flameproof seal to an end of an electric cable which kit includes a first annular body for direct or indirect connection to the end of the cable sheath, a second annular body for engagement with the first annular body and, surrounded by the first and/or second of the annular bodies, a tubular body which has an annular surface apt to abut an annular surface on the second annular body in such a way that when the second annular body is engaged with the first annular body the tubular body is urged axially towards the second annular body, and is characterised in that the annular surface on the tubular body and the annular surface on the second annular body are each so shaped that they interengage to form between them a path of tortuous configuration, such path forming all or part of the required length of the flameproof path between the members.

When the first and second annular bodies will be directly screwed together, the interengaging shaped surfaces will need to be shaped to permit rotation of the second annular body relative to the tubular body; preferably, the tortuous path is formed by providing on each annular surface a plurality of upstanding, spaced, concentric endless troughs, ribs on each of said annular surfaces entering troughs in the other of said annular surfaces. (By "concentric" ribs or grooves is meant ribs or grooves that enclose one another; no limitation on shape is intended.) In this case the annular surfaces on the tubular body and on the second annular body preferably lie in planes normal to the axis of the body, and the ribs and grooves may fit tightly or may be slightly spaced from one another.

The ribs of each annular surface and the troughs on the other annular surface in which the ribs enter may be of any convenient cross-sectional shape and size, but, preferably, each rib and interengaging trough is of substantially triangular cross-section. Other cross-sectional shapes which the ribs and interengaging troughs may take include rectangular and sinusoidal. Preferably, all ribs on both annular surfaces are of substantially the same cross-sectional shape and size as one another.

In one alternative arrangement, the tortuous path is formed by making each annular surface of a stepped configuration comprising a plurality of spaced, concentric endless steps. For ease of manufacture, preferably the circumferential surface defining each step is parallel to the axis of the body and the annular surface defining each step lies in a plane normal to the axis of the body.

The kit preferably also includes a compound chamber, formed in part by the tubular body, through which the or each cable conductor will pass, and a sufficient quantity, as a preformed body or otherwise, of setting synthetic resin or other hardenable material (preferably insulating) in a pasty or viscous condition to fill the chamber.

A kit for terminating a cable or conduit as described and claimed in the Complete Specification of our British Patent No. 1524684 may be modified to form a kit in accordance with the present invention.

The invention also includes a method of effecting a flameproof seal to an end of an electric cable using a kit as hereinbefore described.

The invention further includes a flameproof seal at an end of an electric cable formed from a kit as hereinbefore described.

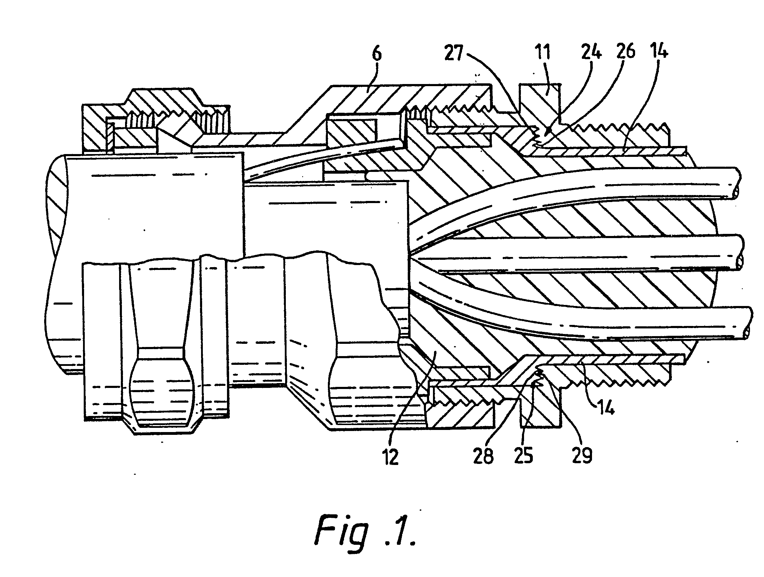

The invention is further illustrated by a brief description, by way of example, of two forms of flameproof seal with reference to the accompanying drawing.

The drawing is a longitudinal sectional view of a termination of a three core cable made by the method of British Patent No. 1524684 using a kit as described and claimed in that Patent but modified to provide a flameproof path between the gland body 11 also called here the second annular body and the second gland member 14 also called here the tubular body. The gland body 11 has a radially extending annular surface 24 from which upstand circumferentially spaced, concentric endless ribs 26, each of triangular cross-section, defining between them endless troughs 27, each of similar shape. The second gland member 14 has a radially extending annular surface 25 from which upstand circumferentially spaced, concentric endless ribs 28, each of triangular cross-section, defining between them troughs 29. When the gland body 11 is screwed to the gland barrel 6 to urge the second gland member 14 axially and so generate pressure in the compound 12, the ribs 26 enter and engage tightly in the troughs 27 and the ribs 28 enter and engage tightly in the troughs 29 to form a flameproof path between the second gland 14 and the second annular body 11.

**Claims**

1. A kit for effecting a flameproof seal to an end of an electric cable, which kit includes a first annular body (6) for direct or indirect connection to the end of the cable sheath, a second annular body (11) for engagement with the first annular body and, surrounded by the first and/or second of the annular bodies, a tubular body (14) which has an annular surface (25) apt to abut an annular surface (24) on the second annular body (11) in such a way that when the second annular body (11) is engaged with the first annular body (6) the tubular body (14) is urged axially towards the second annular body, characterised in that the annular surface (25) on the tubular body (14) and the annular surface (24) on the second annular body (11) are each so shaped that they interengage to form between them a path of tortuous configuration (26, 27; 28, 29), such path forming all or part of the required length of the flameproof path between the members.

2. A kit as claimed in Claim 1 in which the first and second annular bodies directly screw together characterised in that the interengaging shaped surfaces are shaped to permit rotation of the second annular body relative to the tubular body.

3. A kit as claimed in Claim 1 or Claim 2 characterised in that the tortuous path is formed by providing on each annular surface a plurality of upstanding, spaced, concentric endless ribs defining between them a plurality of spaced, concentric endless troughs, ribs on each of said annular surfaces entering troughs in the other of said annular surfaces.

4. A kit as claimed in Claim 3 characterised in that the ribs on each of said annular surfaces enter and fit tightly in the troughs in the other of said annular surfaces.

5. A kit as claimed in Claim 3 or Claim 4 characterised in that the ribs and troughs are triangular in cross-section.

6. A kit as claimed in Claim 1 or Claim 2 characterised in that the tortuous path is formed by making each annular surface of a stepped configuration comprising a plurality of spaced, concentric endless steps.

7. A kit as claimed in any one of the preceding claims including also a compound chamber through which the or each cable conductor will pass and a sufficient quantity of hardenable material (12) in a pasty or viscous condition to fill the chamber, characterised in that the said compound chamber is formed in part by the said tubular body.

8. A method of effecting a flameproof seal to an end of an electric cable by means of the kit claimed in any one of the preceding claims comprising directly or indirectly connecting a first annular body (6) and the end of the cable sheath, engaging a second annular body (11) with the first annular body (6) to surround a tubular body (14) by the first and/or second of the annular bodies, the tubular body having an annular surface (24) that so abuts an annular surface (25) on the second annular body (11) that the tubular body (14) is urged axially towards the second annular body (11), the method being characterised by the shaped annular surfaces on the tubular body and on the second annular body interengaging to form between them a path of tortuous configuration (26, 27; 28, 29), such path forming all or part of the required length of the flameproof path between the members.

9. A flameproof seal made by the kit claimed in any one of Claims 1—7 or by the method claimed in Claim 8.

## Revendications

1. Ensemble de pièces pour réaliser un joint étanche antidéflagrant de boîte d'extrémité de câble électrique, comprenant un premier corps annulaire (6) qui est connecté directement ou indirectement à l'extrémité de la gaine du câble, un deuxième corps annulaire (11) qui s'engage dans le premier corps annulaire et, entouré par le premier et (ou) le deuxième de ces corps annulaires, un corps tubulaire (14) dont une face annulaire (25) est susceptible de buter contre une face annulaire (24) du deuxième corps annulaire (11), de manière telle que, lorsque ce deuxième corps annulaire (11) est engagé dans le premier corps annulaire (6), le corps tubulaire (14) est poussé axialement vers le deuxième corps annulaire, caractérisé en ce que la face annulaire (25) du corps tubulaire (14) et la face annulaire (24) du deuxième corps annulaire (11) ont chacune une forme telle que ces deux faces s'engagent l'une dans l'autre pour former entre elles un parcours de configuration sinueuse (26, 27; 28, 29), ce parcours constituant la totalité ou une partie de la longueur requise du parcours antidéflagrant entre les éléments.

2. Ensemble de pièces suivant la revendication 1, dans lequel le premier et le deuxième corps annulaires se vissent directement l'un dans l'autre, caractérisé en ce que les faces profilées d'engagement l'une dans l'autre ont une forme telle qu'elle permet la rotation du deuxième corps annulaire par rapport au corps tubulaire.

3. Ensemble de pièces suivant l'une des revendications 1 ou 2, caractérisé en ce que le parcours sinueux est formé par la présence, sur chaque face annulaire, de plusieurs nervures concentriques sans fin, espacées et perpendiculaires, déterminant entre elles plusieurs creux concentriques sans fin, les nervures de chacune des faces annulaires pénétrant dans les creux de l'autre face annulaire.

4. Ensemble de pièces suivant la revendication 3, caractérisé en ce que les nervures de chacune des faces annulaires pénètrent et s'adaptent sans jeu dans les creux de l'autre face annulaire.

5. Ensemble de pièces suivant l'une des revendications 3 ou 4, caractérisé en ce que les nervures et les creux ont une forme triangulaire en coupe transversale.

6. Ensemble de pièces suivant l'une des revendications 1 ou 2, caractérisé en ce que le parcours sinueux est formé par une configuration échelonnée de chaque face annulaire, cette configuration comprenant plusieurs échelons concentriques, sans fin et espacés.

7. Ensemble de pièces suivant l'une quelconque des revendications précédentes, comprenant en outre une chambre isolante dans laquelle passera le ou chaque conducteur câblé et une quantité de matière durcissable 12 à l'état pâteux ou visqueux suffisante pour remplir la chambre, caractérisé en ce que cette chambre isolante est formée en partie par le corps tubulaire.

8. Procédé pour réaliser un joint étanche antidéflagrant de boîte d'extrémité de câble électrique au moyen de l'ensemble de pièces suivant l'une quelconque des revendications précédentes, comprenant la connexion directe ou indirecte d'un premier corps annulaire (6) à l'extrémité de la gaine du câble, l'engagement d'un deuxième corps annulaire (11) dans le premier corps annulaire (6) afin d'entourer un corps tubulaire (14) avec ce premier et (ou) ce deuxième corps annulaires, le corps tubulaire comportant une face annulaire (25) qui bute contre une face annulaire (24) du deuxième corps annulaire (11) de telle manière que le corps tubulaire (14) est poussé axialement vers le deuxième corps annulaire (11), ce procédé étant caractérisé par les faces annulaires profilées du corps tubulaire et du deuxième corps annulaire qui s'engagent l'une dans l'autre pour former entre elles un parcours de configuration sinueuse (26, 27; 28, 29), ce parcours constituent la totalité ou une partie de la longueur requise du parcours antidéflagrant entre les éléments.

9. Joint étanche antidéflagrant caractérisé en ce qu'il est formé par l'ensemble de pièces suivant l'une quelconque des revendications 1 à 7 ou par le procédé suivant la revendication 8.

**Patentansprüche**

1. Austrüstung zum Herstellen einer feuerfesten Abdichtung am Ende eines elektrischen Kabels mit einem ersten Ringkörper (6) zum direkten oder indirekten Verbinden mit dem Ende der Kabelumhüllung, einem zweiten Ringkörper (11) zum Eingriff mit dem ersten Ringkörper und mit einem vom ersten und/oder zweiten Ringkörper umgebeneñ Rohrkörper (14), dessen Ringfläche (25) an einer Ringfläche (24) des zweiten Ringkörpers (11) derart anliegt, daß beim Eingriff des zweiten Ringkörpers (11) mit dem ersten Ringkörper (6) der Rohrkörper (14) axial zum zweiten Ringkörper gedrückt wird, dadurch gekennzeichnet, daß die Ringfläche (25) am Rohrkörper (14) und die Ringfläche (24) am zweiten Ringkörper (11) jeweils so geformt sind, daß sie beim gegenseitigen Eingriff zwischen sich eine gewundene Strecke (26, 27; 28, 29) bilden, die vollständig oder teilweise die erforderliche Länge der feuerfesten Strecke zwischen den Bauteilen bildet.

2. Ausrüstung nach Anspruch 1, wobei der erste und der zweite Ringkörper direkt zusammengeschraubt sind, dadurch gekennzeichnet, daß die im gegenseitigen Eingriff stehenden Flächen eine Drehbewegung zwischen dem zweiten Ringkörper relativ zum Rohrkörper gestatten.

3. Ausrüstung nach Anspruch 1 oder 2, dadurch gekennzeichnet, daß die gewundene Strecke dadurch gebildet wird, daß man an jeder Ringfläche mehrere aufrechtsehende, im Abstand angeordnete, konzentrische Endlosrippen vorsieht, zwischen denen mehrere im Abstand angeordnete, konzentrische Endlosvertiefungen definiert sind, wobei die Rippen jeder Ringfläche in die Vertiefungen der anderen Ringfläche eindringen.

4. Ausrüstung nach Anspruch 3, dadurch gekennzeichnet, daß die Rippen an jeder Ringfläche in die Vertiefungen der anderen Ringfläche eindringen und eng in diese passen.

5. Ausrüstung nach Anspruch 3 oder 4, dadurch gekennzeichnet, daß die Rippen und die Vertiefungen im Querschnitt dreieckig sind.

6. Ausrüstung nach Anspruch 1 oder 2, dadurch gekennzeichnet, daß die gewundene Strecke durch stufenförmige Ausbildung jeder Ringfläche mit mehreren im Abstand angeordneten, konzentrischen Endlosstufen gebildet wird.

7. Ausrüstung nach einem der vorstehenden Ansprüche, mit einer Verbundkammer, durch die sich der oder jeder Kabelleiter erstreckt, und mit einer ausreichenden Menge an pastösem oder viskosem, aushärtbarem Material (12) zum Füllen der Kammer, dadurch gekennzeichnet, daß die Verbundkammer teilweise durch den Rohrkörper gebildet wird.

8. Verfahren zum Herstellen einer feuerfesten Abdichtung am Ende eines elektrischen Kabels mit der Ausrüstung nach einem der vorstehenden Ansprüche durch direktes oder indirektes Verbinden eines ersten Ringkörpers (6) mit dem Ende der Kabelumhüllung und durch in Eingriff bringen eines zweiten Ringkörpers (11) mit dem ersten Ringkörper (6), um einen Rohrkörper (14) durch den ersten und/oder den zweiten Ringkörper zu umgeben, wobei der Rohrkörper eine Ringfläche (24) aufweist, die so an einer Ringfläche (25) des zweiten Ringkörpers (11) anliegt, daß der Rohrkörper (14) in Axialrichtung zum zweiten Ringkörper (11) gedrückt wird, dadurch gekennzeichnet, daß die geformten Ringflächen an dem Rohrkörper und am zweiten Ringkörper so miteinander in gegenseitigem Eingriff stehen, daß zwischen ihnen eine gewundene Strecke (26, 27; 28, 29) entsteht, die vollständig oder teilweise die erforderliche Länge der feuerfesten Strecke zwischen den Bauteilen bildet.

9. Feuerfeste Abdichtung hergestellt mit der Ausrüstung nach einem der Ansprüche 1 bis 7 oder mit dem Verfahren nach Anspruch 8.

Fig .1.

0024917